# EUROPÄISCHE PATENTANMELDUNG

(11) **EP 4 001 243 A1**
(43) Veröffentlichungstag der Anmeldung: **25.05.2022**
(21) Anmeldenummer: 20208200.4
(22) Anmeldetag: 17.11.2020
(51) Int. Cl.: C04B 35/622, C04B 35/634, C04B 35/638, B22F 3/04, B22F 3/10, B22F 3/22, B22F 10/60, B33Y 10/00, B33Y 40/20, C22C 1/04

(54) **VERFAHREN ZUR HERSTELLUNG VON FORMKÖRPERN DURCH SINTERN**

(71) Anmelder: Element 22 GmbH, 24148 Kiel (DE)
(72) Erfinder: Geronimo Schaper, Johannes, 24867 Dannewerk (DE); Jaeckel, Manfred, 27612 Loxstedt (DE)
(74) Vertreter: Raffay & Fleck

(57) **Zusammenfassung**

Offenbart wird ein Verfahren zur Herstellung eines Formkörpers durch Sintern, mit folgenden Schritten
a. Bereitstellen eines ein Metall- und/oder Keramikpulver enthaltenden Ausgangsmaterials,
b. entweder Formen eines Grünteils aus dem Ausgangsmaterial oder Formen eines Braunteils aus dem Ausgangsmaterial, jeweils durch entweder Formen des Ausgangsmaterials, wenn dieses eine Mischung aus dem Metall- und/oder Keramikpulver und Bindermaterial aufweist, oder durch Einbringen eines Bindermaterials in ein aus dem Ausgangsmaterial gebildetes Pulverbett,
c. wenn in Schritt b. ein Grünteil geformt worden ist, chemisches Entbindern und/oder Entbindern mittels eines Lösemittels des Grünteils zum Erhalten eines Braunteils,
d. thermisches Entbindern des in Schritt b. oder c. erhaltenen Braunteils,
e. Verdichten des Braunteils zu dem Formkörper durch Sintern.

Das Besondere an dem hier vorgestellten Verfahren besteht darin, dass das Grünteil und/oder das Braunteil vor dem Schritt d. durch Beaufschlagen mit einem unter einem erhöhten Druck stehenden Medium einem isostatischen Pressvorgang unterzogen wird. Dadurch wird eine Erhöhung der Materialdichte nach dem Sinterschritt erreicht verglichen mit Material, dass einem solchen isosotatischen Pressvorgang nicht unterzogen wird.

## Beschreibung

Die vorliegende Erfindung betrifft ein Verfahren zur Herstellung eines Formkörpers durch Sintern gemäß dem Oberbegriff des Anspruchs 1. Das Verfahren ist dabei insbesondere für die pulvermetallurgische Herstellung von Formkörpern geeignet, kann aber ebenso gut auch für die Herstellung von Formkörpern aus keramischem Material unter Einbeziehung einer Sinterverdichtung und -verfestigung eingesetzt werden.

Die Herstellung von metallischen Formkörpern mittels pulvermetallurgischer Verfahren ist eine seit langem bekannte und auch in der Massenproduktion praktizierte Vorgehensweise. Gleiches gilt für die sinterbasierten Herstellung von Keramikformkörpern. Insbesondere werden Verfahren praktiziert, bei denen zunächst aus einem bereitgestellten Ausgangsmaterial in Form von einer Mischung eines Metallpulvers, bzw. eines Keramikpulvers mit Bindermaterial, einem sogenannten Feedstock, ein Grünteil oder ein Braunteil gefertigt wird. Alternativ kann auch ein Ausgangsmaterial, das ausschließlich Metall- oder Keramikpulver enthält, in einem Pulverbett angeordnet und kann anschließend durch gezieltes Einbringen von Bindermaterial in das Pulverbett ein Grünteil oder ein Braunteil gefertigt werden. In beiden Fällen wird nach einem unter Einsatz eines Lösungsmittels erfolgenden chemischen (Grünteil) und/oder thermischen (Braunteil) Entfernen des Bindermaterials, dem sogenannten Entbindern, das Rohteil in einem Sinterschritt komprimiert und verfestigt. Dabei unterscheiden sich Grünteil und Braunteil durch einerseits den Gehalt an Bindermaterial im Materialgerüst, andererseits durch die Art des Binders. Grünteile enthalten dabei in der Regel einen höheren Binderanteil und stets jedenfalls auch solche Binderkomponenten wie z.B. Weichmacher und Wachse, die mittels eines Lösungsmittels chemisch zu entfernen sind. Zudem enthalten die Grünteile aber auch einen Bestandteil eines weiteren Binders, der nicht chemisch ausgelöst, sondern durch Erhitzen ausgetrieben, also thermisch entbindert wird, sind diese also aus einem Ausgangsmaterial mit einem Mehrkomponentenbindersystem und den Metall- oder Keramikpulverpartikeln gebildet.

Es gibt aber auch Verfahren, bei denen sogleich ein Braunteil hergestellt wird, das keinen Anteil an chemisch mittels Lösungsmitteln zu entfernenden Bindermaterialien enthält. Diese Braunteile sind häufig aus einer Ausgangsmasse, einem Feedstock, hergestellt, die einen geringeren Anteil eines Bindermaterials aufweist.

Die Formgebung zum Bilden des Grünteils, bzw. unmittelbar des Braunteils kann auf verschiedene Arten erfolgen. In einfachen Varianten geschieht dies durch einfache Pressformung in Pressformen, aus denen die Formteile ausgeformt werden, häufig direkt als Braunteile, thermisch entbindert und abschließend gesintert werden. Es kommen aber auch andere Formgebungsverfahren infrage, so zum Beispiel MIM (Metal Injection Moulding), Schlickerguss, Extrusion oder - dies zunehmend mehr - auch 3-D-Druckverfahren.

Während zunächst überwiegend Stahl mit unterschiedlicher Legierung, aber auch Kupfer und Bronze für die pulvermetallurgische Herstellung von Formkörpern verwendet worden war, ist zuletzt der Fokus auch auf die Verarbeitung von reaktiven Metallen, insbesondere Titan oder Titanlegierungen und Magnesium oder Magnesiumlegierungen gefallen. So werden beispielsweise im Bereich der Medizintechnik, aber auch in anderen Industriebereichen diverse Komponenten heute pulvermetallurgisch aus Titan bzw. Titanlegierungen hergestellt, zum Beispiel Gehäuse für implantierbare Insulinpumpen oder dergleichen.

Eine Herausforderung bei der sinterbasierten Herstellung von Formkörpern, bei der die Formkörper in einem Sinterschritt verdichtet werden, besteht neben einer Berücksichtigung der Materialschrumpfung beim Sintern, in dem Erreichen einer gewünscht hohen Materialdichte und Festigkeit des Sinterteils. Denn zunächst einmal ist das Ausgangsmaterial vor dem Sintern mit Poren und bisweilen auch mit Fehlstellen durchsetzt. Diese Poren und Fehlstellen rühren aus zweierlei Entstehungsmechanismen:
Einerseits können bereits im Zuge der Formgebung des Grünteils, bzw. des Braunteils prozessbedingte Lücken, in der Regel größere, auch als Makroporen bezeichnete, Poren oder aufgrund einer Delamination auftretende Querlunker, im Materialgerüst durch ein ungenügendes Ausfüllen des von den Formteilen (Grünteil, Braunteil) umschlossenen Raums mit dem Ausgangsmaterial im Formgebungsprozess entstehen oder auch durch eine ungenügende Verbindung von lagenweise aufgetragenen Pulverschichten. Solche Fehlstellen können sowohl beim 3-D-Drucken, als auch in einem Pressvorgang, aber auch beim MIM, beim Schlickerguss oder bei der Extrusion auftreten.

Andererseits bilden sich - prozessbedingt - Mikroporen aus, wenn das Grünteil, bzw. das Braunteil entbindert wird: Dort wo zunächst Binderpartikel angeordnet waren, entstehen diese zwischen den ansonsten dicht gepackten Metallpartikeln liegenden Mikroporen.

Während die Mikroporen, die beim Entbindern entstehen, durch geeignete Parameterwahl des Sinterprozesses in der Regel geschlossen werden können, das Material im Sintervorgang hoch verdichtet werden kann, stellen die bereits im Formgebungsprozess des Grünteils, bzw. des Braunteils entstehenden Fehlstellen, wie eben die Makroporen oder Querlunker, ein größeres Problem dar. Denn diese können häufig auch in einem an das Entbindern sich anschließenden Sintervorgang nicht mehr vollständig geschlossen werden. Während die vorstehend genannten Mikroporen auch durch ein Umlagern der Pulverpartikel nicht geschlossen werden können, als Freiräume zwischen eng aneinander liegenden, dicht gepackten Pulverpartikeln unvermeidbar in dem Grünteil, bzw. dem Braunteil zu finden sind, erst im Sintervorgang durch dort auftretende Verformung der Pulverpartikel und die Pulverpartikel verbindende Diffusionsprozesse geschlossen werden, sind die Fehlstellen, wie Makroporen oder Querlunker, so beschaffen, dass sie grundsätzlich durch Umlagern der Pulverpartikel aufgefüllt werden können. An den Positionen solcher Fehlstellen "fehlt" gleichermaßen ein oder "fehlen" sogar mehrere Pulverpartikel des verwendeten Materialpulvers.

Um nun die im Sintervorgang nicht zu schießenden Fehlstellen zu beseitigen, werden Sinterbauteile gerade dann, wenn es auf eine Kompaktheit des Bauteils und eine hohe Dichte, also eine geringe Porosität, des fertigen Teils ankommt, weiteren, nach dem Sinterprozess durchgeführten Behandlungsschritten unterzogen, um die Materialdichte weiter zu erhöhen und die verbliebenen Makroporen zu verschließen. Hier findet häufig das sogenannte heißisostatische Pressen (HIP) Anwendung. Hierbei werden die fertig gesinterten Formkörper in einem Behandlungsraum mit einem unter einem hohen Druck stehenden Medium, typischerweise einem Inertgas, beaufschlagt und zugleich einer hohen Temperatur ausgesetzt. Je nach dem verarbeiteten metallischen oder keramischen Material werden hier hohe Drücke, typischerweise 1000 bar und höher, oft bis zu mehrere 1000 bar, benötigt sowie hohe Temperaturen, typischerweise mehrere 100 °C, nicht selten bis über 1000 °C). Bei der Prozessierung von reaktiven Metallen herrschen zudem hohe Anforderungen an die Reinheit des Pressmediums, um eine Kontamination der Bauteile zu vermeiden. Nicht zuletzt diese Anforderungen an die Prozessbedingungen machen das heißisostatische Pressen zu einem aufwendigen und kostspieligen Verfahren, für das es nur wenige Anbieter am Markt gibt. Zudem ist nicht für alle Materialien sichergestellt, dass ein heißisostatisches Pressen des gesinterten Formkörpers überhaupt durchgeführt werden kann.

Einerseits müssen weiterhin Anlagen für diesen Verfahrensschritt so ausgelegt und gebaut werden, dass sie den hohen Drücken zuverlässig standhalten und es zu keinen - bei diesen hohen Drücken verheerenden - Unfällen kommen kann. Andererseits ist das Erzeugen derart hoher Drücke und hoher Temperaturen energieaufwendig. Dabei zeigt sich zudem, dass die unter dem hohen anliegenden Druck zwar zunächst geschlossenen Fehlstellen sich vielfach nach dem heißisostatischen Pressen aufgrund des in ihrem Innern gefangenen, sich ausdehnenden Gases bei thermischer Beanspruchung des Formteils wieder öffnen können, sodass sich in einer Art Rückstelleffekt jedenfalls ein Teil der Poren wieder ausbildet. Schließlich erfordern der für das heißisostatische Pressen einzustellende hohe Druck, typischerweise im Bereich vom 1000 bis 2000 bar, den Einsatz einer großen Menge des Prozessmediums, z.B. eines Gases, was - gerade dann, wenn das Prozessmedium höchste Anforderungen an die Reinheit zu erfüllen hat - einen deutlichen Einfluss auf die Kosten des Verfahrens nimmt.

Wenn darüber hinaus die zu verschließenden Fehlstellen, wie z.B. Makroporen, nicht im Innern des Formkörpers eingeschlossen, sondern nach außen offen liegend sind, kann durch ein heißisostatisches Pressen ein Verschließen der Fehlstellen nicht erreicht werden. Denn dann dringt das unter Druck stehende Medium, z.B. ein Inertgas wie Argon, eben auch in die offenen Fehlstellen ein und hält diese offen. Dies ist von besonderer Relevanz, da es bei einigen 3D-Druckverfahren beim Drucken zwischen den Schichten zu einer Art Delamination kommen kann, die zum Teil erst beim Entbindern oder sogar erst beim Sintern sichtbar wird. Eine solche Delamination, die einen erheblichen Mangel des Formteils darstellt, kann teilweise aber nach dem Sintern noch nicht erkennbar zu Tage treten, sondern erst bei einer mechanischen Beanspruchung des Formteils Auswirkungen zeigen. Diese auf eine Delamination zurückgehenden an der Oberfläche des Formteils auftretenden, bzw. bis zu der Oberfläche reichenden Fehlstellen haben gerade bei dynamischer Beanspruchung des Formteils einen besonders hohen Einfluss auf die sogenannte Wechsellast. Dies kann im schlimmsten Fall zu einem Versagen eines so hergestellten Formteils, dies auch in kritischen Anwendungssituationen, führen.

Hier soll mit der Erfindung Abhilfe geschaffen werden, indem ein Verfahren zur Herstellung eines Formkörpers unter Einbeziehen eines Sinterschritts angegeben wird, welches eine Reduzierung bzw. ein Schließen von Fehlstellen, wie Makroporen oder Querlunkern, bereits vor dem Sinterschritt erlaubt und damit die durch das Sintern erhaltene Materialdichte verbessert, und so eine nach dem Sintern erfolgende Nachbehandlung, wie zum Beispiel ein heißisostatisches Pressen, überflüssig macht.

Diese Aufgabe wird erfindungsgemäß gelöst durch ein Verfahren mit den Merkmalen des Patentanspruchs 1. Vorteilhafte Weiterbildungen des erfindungsgemäßen Verfahrens sind in den abhängigen Ansprüchen 2 bis 15 angegeben.

Ein erfindungsgemäßes Verfahren zur Herstellung eines Formkörpers durch Sintern beinhaltet dabei zunächst einmal, wie dies auch im Stand der Technik üblich ist, folgende Schritte:
a. Bereitstellen eines ein Metall- und/oder Keramikpulver enthaltenden Ausgangsmaterials,
b. entweder Formen eines Grünteils aus dem Ausgangsmaterial oder Formen eines Braunteils aus dem Ausgangsmaterial, jeweils durch entweder Formen des Ausgangsmaterials, wenn dieses eine Mischung aus dem Materialpulver und Bindermaterial aufweist, oder durch Einbringen eines Bindermaterials in ein aus dem Ausgangsmaterial gebildetes Pulverbett,
c. wenn in Schritt b. ein Grünteil geformt worden ist, chemisches Entbindern und/oder Entbindern mittels eines Lösungsmittels des Grünteils zum Erhalten eines Braunteils,
d. thermisches Entbindern des in Schritt b. oder c. erhaltenen Braunteils,
e. Verdichten des Braunteils zu dem Formkörper durch Sintern.

Diese Verfahrensschritte sind, wie bereits erwähnt, auch bei den aus dem Stand der Technik bekannten Herstellungsverfahren für Formkörper üblich, die pulvermetallurgisch oder sinterbasiert aus Keramikpulver hergestellt werden. Das Besondere an dem erfindungsgemäßen Verfahren ist nun, dass das Grünteil und/oder das Braunteil vor dem Schritt d. durch Beaufschlagen mit einem unter einem erhöhten Druck stehenden Medium einem isostatischen Pressvorgang unterzogen wird.

Bei dem erfindungsgemäßen Verfahren wird also, bevor der abschließende Sinterschritt durchgeführt wird, das aus dem mit Binder zusammengehaltenen Materialpulver gebildete Formteil in einem isostatischen Pressvorgang verdichtet, um insbesondere in dem unter Schritt b. durchgeführten Formgebungsvorgang entstandene Fehlstellen, wie Makroporen oder sonstige Defekte in dem Materialgefüge zu verschließen, gegebenenfalls auch bereits durch ein chemisches Entbindern des Grünteils gebildete Makroporen zu schließen. Dabei wirkt der Druck, da der Pressvorgang isostatisch ausgeführt wird, allseits auf das Formteil ein und führt so zu einer gleichmäßigen Komprimierung, ohne die Gefahr einer insbesondere eindimensionalen Veränderung der gegebenen Form des Formkörpers hervorzurufen. Der Pressvorgang wird dabei insbesondere bei ausgeformtem, "freiliegenden" Formteil durchgeführt. Aufgrund der durch diesen Schritt erzielten Verdichtung können in dem nachfolgend durchgeführten Sinterschritt die einzelnen Partikel des Pulvermaterials, also des Metall- und/oder Keramikpulvers, besonders gut miteinander verbunden werden, ohne dabei etwa in größerem Anteil unerwünschte Makroporen oder andere Fehlstellen auszubilden. Der Formkörper weist nach dem Sintern eine besonders hohe Materialdichte auf. Eine Nachbehandlung des Formkörpers zur Erhöhung der Materialdichte, wie dies im Stand der Technik häufig unternommen wird, beispielsweise und insbesondere durch ein heißisostatisches Pressen (HIP) des fertigen Metallteils, ist so nicht erforderlich.

Da bei dem erfindungsgemäßen isostatischen Pressen des noch nicht gesinterten Formteils (Grünteil und/oder Braunteil) noch keine Materialverbindung zwischen den Pulverpartikeln besteht, lediglich das Gemenge aus Binder und Materialpulver verformt und komprimiert werden muss, kann das Pressen mit einem weitaus geringeren Druck erfolgen als dies beim nach dem Sintern stattfindenden heißisostatischen Pressen (HIP) erforderlich ist. Auch ist ein Erhöhen der Temperatur auf mehrere 100 °C bis zu über 1000 °C, wie dies beim heißisostatischen Pressen (HIP) üblich und erforderlich ist, nicht notwendig. Dadurch ergibt sich nicht nur ein erheblich geringerer Energiebedarf für einen solchen erfindungsgemäßen, an dem nicht gesinterten Formteil durchgeführten isostatischen Pressvorgang im Vergleich zu dem Energiebedarf beim heißisostatischen Pressen (HIP) nach dem Sintern. Auch der apparative Aufwand, der für den Schritt des isostatischen Pressens des noch nicht gesinterten Formteils zu betreiben ist, ist erheblich geringer als derjenige für das heißisostatische Pressen (HIP). Insbesondere sind aufgrund des geringeren anzulegenden Drucks und auch der geringeren Temperaturen weitaus niedrigere Sicherheitsanforderungen an den apparativen Aufbau gestellt, in dem der erfindungsgemäße isostatische Pressvorgang durchgeführt werden soll.

Bei dem erfindungsgemäß vor dem Sinterschritt durchzuführenden isostatischen Pressvorgang kann eine gegenüber der Normaltemperatur erhöhte Temperatur angewendet werden, um insbesondere das Bindermaterial zu erweichen und zu einem gewissen Grad fließfähig bzw. plastisch verformbaren zu machen. Für die typischerweise bei den pulvermetallurgischen Herstellungsverfahren als Bindermaterialien oder kombiniert in Bindersystemen eingesetzten Polymermaterialien genügen dabei in der Regel z.B. Temperaturen im Bereich von 20 °C bis 200 °C. Aufgrund der deutlich geringeren Temperatur während des Pressvorgangs kann das erfindungsgemäß vor dem Sintern durchgeführte isostatische Pressen, wenn eine Temperaturerhöhung vorgesehen ist, in Abgrenzung zu dem bekannten, an dem fertig gesinterten Formkörper durchgeführten heißisostatischen Pressen (HIP) auch als warmisostatisches Pressen (WIP) bezeichnet werden.

Der für den erfindungsgemäß vor dem Sinterschritt durchgeführten isostatischen Pressvorgang gewählte Druck, unter dem das zum Beaufschlagen des Formteils (Grünteil und/oder Braunteil) verwendete Medium steht, liegt, wie erwähnt, typischerweise deutlich unterhalb desjenigen Drucks, der für ein nach dem Sinterschritt im Stand der Technik durchgeführtes heißisostatisches Pressen (HIP) verwendet wird, und kann insbesondere im Bereich von >60 bar, vorzugsvveise >80 bar, insbesondere >100 bar liegen. Auch wenn grundsätzlich auch deutlich höhere Drücke gewählt werden können, insbesondere dann, wenn bei niedrigeren Temperaturen gearbeitet wird, wird man in der Praxis diese nicht einstellen, schon deshalb nicht, um nicht doch auf die aufwendigen und teuren Apparaturen zur sicheren Beherrschung von solch hohen Drücken, wie sie beim heißisostatischen Pressen eingesetzt werden, erforderlich sind. Entsprechend werden bei dem erfindungsgemäßen Verfahren in der Regel keine Drücke oberhalb von 500 bar gewählt werden, meist sogar Drücke von unterhalb 300 bar.

Als Medium, mit dem das Formteil (Grünteil und/oder Braunteil) beaufschlagt wird, kommen prinzipiell alle möglichen Medien, so fein partikulare Festkörperteilchen, Flüssigkeiten oder Gase in Betracht. Bevorzugt wird als Medium eine Flüssigkeit oder alternativ ein Gas gewählt. Dabei ist darauf zu achten, dass das gewählte Medium bei den gegebenen Bedingungen von Druck und Temperatur während des Pressvorgang mit dem Materialsystem des Formteils, insbesondere mit dem Metallpulver im Falle eines pulvermetallurgisch herzustellenden Formteils, aber auch allgemein mit dem Binder, nicht in unerwünschter Weise interagiert, insbesondere keine unerwünschten chemischen Reaktionen eingeht oder Rückstände und Einlagerungen bildet. Der erfindungsgemäße, vor dem Sinterschritt durchzuführende Pressvorgang kann beispielsweise unter Eindringen von Wasser als Medium durchgeführt werden. Bevorzugt können aber auch Gase, insbesondere Intergase, Verwendung finden, wie zum Beispiel Argon oder Stickstoff.

Insbesondere dann, wenn die durch den erfindungsgemäß vor dem Sinterschritt durchzuführenden Pressvorgang zu verschließenden Fehlstellen, wie etwa Makroporen, offen liegen, d. h. eine Verbindung durch die Oberfläche des Formteils nach außen aufweisen, oder wenn zum Beispiel nach einer Formgebung im 3-D-Druck zu beobachtende Defekte in einer Flächenverbindungen (Delamination) behoben werden sollen, bietet es sich an und ist in einer vorteilhaften erfindungsgemäßen Weiterbildung vorgesehen, dass das Formteil (Grünteil und/oder Braunteil) mit einer die Außenfläche des Formteils umschließenden Beschichtung, insbesondere einer Polymerbeschichtung, versehen wird. Eine solche Beschichtung kann zum Beispiel in einem Tauchvorgang aufgebracht werden, in dem das Formteil (Grünteil und/oder Braunteil) in ein Bad eines verflüssigten Beschichtungsmaterials, zum Beispiel eines Polymers, getaucht wird und die Beschichtung anschließend erstarrt. Es sind aber auch andere Aufbringungsverfahren, wie zum Beispiel Sprühverfahren oder ein Auftrag mit einem Aufbringungswerkzeug ähnlich jenen für Lacke oder Farben denkbar. Auch ein Umgeben mit einer Folie oder dergleichen, z.B. ein Einschweißen in eine solche Folie oder vergleichbare Umhüllung, ist möglich. Eine solche aufgebrachte Beschichtung schließt einerseits an der Oberfläche des Formteils (Grünteil und/oder Braunteil) bestehende Spalte und Öffnungen, zum Beispiel in einem offenen Porensystem, sodass durch Aufbringen des unter Druck stehenden Mediums auch solche Fehlstellen komprimiert und geschlossen werden können. Andererseits bildet diese Beschichtung auch einen Schutz um das Formteil herum, sodass bei Verwendung eines Mediums, das mit den Bestandteilen des Grünteils und/oder Braunteils reagieren kann oder dessen etwaige Rückstände den Sinterprozess schadhaft beeinflussen könnten, ein Kontakt dieses Mediums mit dem Formteil verhindert werden kann. So kann zum Beispiel die Verwendung von Wasser als Medium ermöglicht werden, wenn eine solche Beschichtung wasserresistent ist und nach dem vor dem Sinterschritt durchzuführenden Pressvorgang entfernt werden kann, ohne dass Wasserrückstände in einer nicht gewollten Form mit dem Formteil in Berührung geraten, dort eingelagert werden oder gar reagieren und Sauerstoff in den Formkörper eintragen können.

Die gemäß der vorstehend beschriebenen Weiterbildung aufgebrachte Beschichtung kann insbesondere aus einem chemisch und/oder lösungsmittelbasiert und/oder thermisch abtrennbaren Material gebildet sein. Sie kann aber, wenn z.B. eine Folie oder eine vergleichbare hüllenartige Beschichtung verwendet wird, auch mechanisch entfernbar sein. Ist die Beschichtung chemisch und/oder lösungsmittelbasiert und/oder thermisch abtrennbar, so kann sie idealerweise in einem einheitlichen Prozess gemeinsam mit dem Bindermaterial des das Formteil vor dem Sintervorgang zusammenhaltenden Bindersystems chemisch und/oder durch ein Lösungsmittel und/oder thermisch entbindert bzw. entfernt werden. Bevorzugt ist die Beschichtung aus einem chemisch und/oder durch ein Lösungsmittel abtrennbaren Material gebildet, sodass die Beschichtung nach dem isostatischen Pressvorgang und vor dem Sinterschritt chemisch und/oder durch Einsatz eines Lösungsmittels entfernt werden kann. Auf diese Weise kann der Anteil an insbesondere organischem Material, der bei einem anschließenden thermischen Entbindern, das regelmäßig in einem durchgehenden Bearbeitungsschritt mit anschließendem Sintervorgang erfolgt, reduziert werden, sodass sich Kontaminationen des Formkörpers durch Einbau von zum Beispiel Kohlenstoff aus dem Beschichtungsmaterial vermeiden, jedenfalls verringern lassen. Es ist aber auch denkbar, dass eine Beschichtung auf andere Weise abgetrennt wird, z.B. durch Anlagen eines Unterdrucks, durch Vakuum.

Wenn das in dem Ausgangsmaterial (Feedstock) verwendete Bindersystem einen besonders festen Binder oder Bestandteil eines Binders enthält, so kann dieser durch Einbringen eines Weichmachers, der auch als Plastifizierungsmittel bezeichnet werden kann, vor dem erfindungsgemäß vor dem Sinterschritt durchzuführenden isostatischen Pressen duktiler gemacht werden. Insbesondere dann, wenn das gebildete Formteil (Grünteil und/oder Braunteil) eine offenporige Struktur aufweist, kann der Weichmacher auch in das Innere des Formteils gelangen und dort für eine Erhöhung der Duktilität des Binders sorgen. Wird auf das Formteil eine Beschichtung aufgebracht, bevor der erfindungsgemäße Schritt des isostatischen Pressens vor dem eigentlichen Sinterschritt durchgeführt wird, so erfolgt die Behandlung mit dem Weichmacher vor dem Auftrag dieser Beschichtung. Der Weichmacher ist vorteilhafterweise so gewählt, dass dieser vor dem eigentlichen Sintervorgang ebenfalls, idealerweise in dem oder den ohnehin vorgesehenen Entbinderungsschritt(en) mit entfernt und ausgetragen wird. Als Weichmacher kommen hier die üblichen und bekannten Weichmacher in Betracht, die für die an sich bekannten Bindersysteme und die darin verwendeten Polymere wirksam sind und eingesetzt werden können, solch ein Weichmacher kann z.B. auch Wasser sein, wenn bspw. Polyamide als Binderkomponenten verwendet werden. Idealerweise sollten solche Weichmacher sich spätestens bei denjenigen Temperaturen, die für ein thermisches Entbindern in dem pulvermetallurgischen Herstellungsverfahren vorgesehen sind, verflüchtigen bzw. bei diesen Temperaturen aus dem Braunteil, bzw. aus dem zu sinternden Teil ausgetrieben werden. Es ist auch denkbar, einen eingesetzten Weichmacher in einem chemischen und/oder lösemittelbasierten Schritt zu entfernen, insbesondere auch zusammen mit einer möglichen Beschichtung.

Die Verwendung eines Weichmachers kann auch unter einem anderen Gesichtspunkt von Vorteil sein: Ein Weichmacher kann nämlich auch eine "Klebwirkung" des Bindemittels beinträchtigen, kann die "Klebrigkeit" des Bindemittels erhöhen. Dies kann helfen, bei dem hier beschriebenen warmisostatischen Pressen des Braunteils die Fehlstellen zu schließen und geschlossen zu halten, da der Binder die einmal geschlossenen Fehlstellen dann durch seine Cohäsionskraft zusammenhält.

Das Formen des Grünteils oder Braunteils in Schritt b. des erfindungsgemäßen Verfahrens kann vorzugsweise durch ein additives Formgebungsverfahren erfolgen, insbesondere durch MIM, durch 3-D-Druck, Schlickerguss, Extrusion oder durch einen Formpressvorgang.

Das erfindungsgemäße Verfahren kann als pulvermetallurgisches Verfahren und dabei prinzipiell mit allen möglichen Metallen und Metalllegierungen durchgeführt werden, zum Beispiel mit Stahl, so auch Edelstahl, Bronze, Kupfer und dergleichen. Insbesondere eignet es sich aber auch sehr gut für die pulvermetallurgische Herstellung von Formkörpern aus einem reaktiven Metall, wie Titan, einer Titanlegierung, Magnesium oder einer Magnesiumlegierung, wofür als Metallpulver entsprechend ein solches eines reaktiven Metalls, wie zum Beispiel Titanpulver, ein Titanlegierungspulver, Magnesiumpulver oder ein Magnesiumlegierungspulver verwendet wird. Angewendet werden kann das erfindungsgemäße Verfahren aber auch auf andere reaktive Metalle wie sog. Superlegierungen auf Nickel- oder Kobaltbasis und auf die Refraktärmetalle Molybdän, Wolfram, Rhenium und Tantal. Als "reaktive Metalle" werden hier insbesondere unedle Metalle bezeichnet, insbesondere solche mit einem Standardpotential E° von < -1,0 V. Auch für die Herstellung von Formteilen aus Hartmetallen, bzw. aus einem Material mit einer metallischen oder keramischen Grundmatrix und darin eingebetteten Partikeln aus Hartmetall, wie z.B. Wolfram- oder Kobaltcarbid, kann das erfindungsgemäße Verfahren verwendet werden. Ebenso kann das erfindungsgemäße Verfahren auch für die sinterbasierte Herstellung von Keramikformkörpern eingesetzt werden, wobei dann ein Keramikpulver und Binder enthaltende Grün- oder Braunteile gebildet und vor dem Sintern mit dem hier offenbarten warmisostatischen Pressen behandelt werden.

Durch das erfindungsgemäße warmisostatische Pressen vor dem Sinterschritt können nicht nur die beim Formgebungsverfahren erhaltenen Fehlstellen geschlossen werden, sondern es kann mit geeigneten Einstellungen von Druck und Temperatur auch bereits eine erste Verdichtung des Grün- oder Braunteils erfolgen, also eine Erhöhung der Packungsdichte der Materialpulverpartikel im Volumen, mithin eine erste Reduzierung der Mikroporösität schon vor dem eigentlichen Sintern.

Die Wirksamkeit der Erfindung konnte von dem Erfinder in Versuchen nachgewiesen werden. Unter anderem wurde von dem Erfinder der nachfolgend beschriebene und in den anliegenden Figuren näher illustrierte und in seinem Ergebnis erläuterte Versuch durchgeführt und wie beschrieben ausgewertet. Dabei zeigen die Figuren:
- Fig. 1: in einer schematischen Darstellung das erfindungsgemäße Vorgehen bei der Durchführung des hier als warmisostatischen Pressen bezeichneten Verfahrensschritts in dem durchgeführten Versuch und
- Fig. 2: in einem Säulendiagramm einen Vergleich der ermittelten Porosität von nach einem erfindungsgemäßen Verfahren hergestellten Sinterformteilen mit der ermittelten Porosität von mit Ausnahme des nicht durchgeführten warmisostatischen Pressens gleich hergestellten Referenzformteilen.

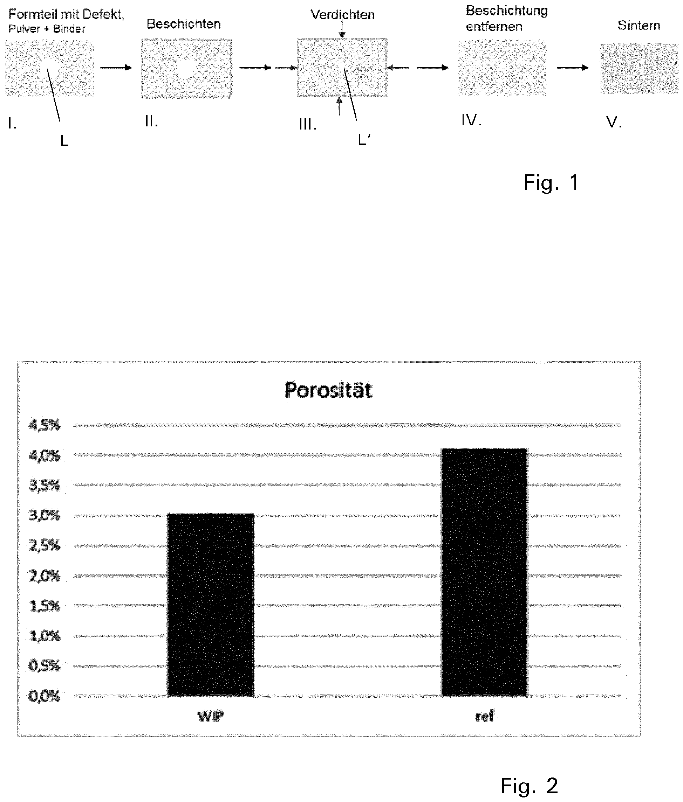

Zur Durchführung des Versuchs wurde eine Platte von etwa 5 mm Höhe aus einem Ti6Al4V-Pulver sowie ein auf Polyamid-Basis gebildetes Bindersystem enthaltenden Ausgangsmaterial, einem Feedstock, gepresst und anschließend in Streifen, bzw. Balken zersägt. Diese Balken enthielten Lufteinschlüsse, sog. Lunker. Dies ist in der mit I bezeichneten Darstellung der Figur 1 gezeigt, wo ein Lunker mit L bezeichnet ist.

Die erhaltenen Balken wurden in Aceton lösemittelentbindert. Anschließend wurde eine Hälfte der Balken (WIP) mit einer Mischung aus Aceton und Weichmacher infiltriert. Nach dem Trocknen wurden die so behandelten Balken mit einer Mischung aus Aceton und einem acetonlöslichen Polymer nassbeschichtet und erneut getrocknet. Nach diesem zweiten Trockenvorgang verblieb auf den Außenflächen der so behandelten Balken eine Beschichtung aus dem Polymer. Dies ist in der Darstellung II der Figur 1 wiedergegeben.

Die verbleibende Hälfte der Balken verblieb als Referenz.

Die erste mit dem Polymer beschichtete Hälfte der Balken wurde einem erfindungsgemäßen, vor einem Sinterschritt durchgeführten Pressvorgang unterzogen (warmisostatischen Pressen, WIP). Diese WIP-Behandlung wurde durch Beaufschlagen mit Argon bei einem Druck von 90 bar und bei zunächst ca. 160°C durchgeführt. Anschließend wurde der Druck gehalten, während die Temperatur abgesenkt wurde. Diese WIP-Behandlung ist in der Darstellung III der Figur 1 veranschaulicht. Nach dieser Behandlung wurden die so behandelten Balken erneut in Aceton entbindert um den Weichmacher und die Polymerbeschichtung wieder zu entfernen (vgl. Darstellung IV in Figur 1).

Anschließend wurden die der WIP-Behandlung unterzogenen Balken sowie die als Referenz behaltenen, unbehandelten Balken in einem gemeinsamen Ofenlauf gesintert. Dies ist in der Darstellung V der Figur 1 veranschaulicht. An den gesinterten Bauteilen wurde eine Dichtebestimmung nach dem Archimedesprinzip durchgeführt. Die Messergebnisse wurden gemittelt und die Mittelwerte sind in Figur 2 aufgetragen. Diese Ergebnisse zeigen, dass die mit der als *WIP* bezeichneten Säule dargestellte Porosität derjenigen Balken, die mit dem vorstehend beschriebenen und erfindungsgemäßen Verfahren behandelt wurden, um ca. 1% geringer liegt als die mit der als *ref* bezeichneten Säule dargestellte Porosität der nicht behandelten Referenz-Balken. Es ergibt sich also, dass die zunächst in beiden Balkengruppen vorhandenen Lunker L in der WIP-behandelten Gruppe der Balken volumenverkleinert oder sogar gänzlich geschlossen werden konnten. Dies ist in der Figur 1 durch den kleiner dargestellten Lunker L' veranschaulicht.

Es ist an dieser Stelle noch einmal darauf zu verweisen, dass der voranstehend geschilderte und in den Figuren illustrierte Versuch lediglich eine mögliche Vorgehensweise zur Durchführung des erfindungsgemäßen Verfahrens darstellt. Insbesondere ist das Verfahren nicht auf pulvermetallurgische Herstellungsverfahren beschränkt, erst recht nicht auf solche mit der in dem Versuch konkret verwendeten Legierung, sondern kann ebenso gut auch mit keramischem Material durchgeführt werden. Auch ist die in dem Versuch gewählte Beschichtung des Formteils vor der WIP-Behandlung nicht zwingend erforderlich. Diese Beschichtung ist optional und wird von dem Fachmann gewählt werden, wenn sie wie in der vorstehenden Beschreibung dargelegt, vorteilhaft ist. Entscheidend ist allein der Umstand, dass an dem Grünteil und/oder Braunteil vor dem Sinterschritt ein hier als warmisostatisches Pressen bezeichneter Behandlungsschritt durchgeführt wird, um so bereits vor dem Sintern eine Erhöhung der Materialdichte zu erhalten.

## Patentansprüche

1. Verfahren zur Herstellung eines Formkörpers durch Sintern, mit folgenden Schritten
a. Bereitstellen eines ein Metall- und/oder Keramikpulver enthaltenden Ausgangsmaterials,
b. entweder Formen eines Grünteils aus dem Ausgangsmaterial oder Formen eines Braunteils aus dem Ausgangsmaterial, jeweils durch entweder Formen des Ausgangsmaterials, wenn dieses eine Mischung aus dem Metall- und/oder Keramikpulver und Bindermaterial aufweist, oder durch Einbringen eines Bindermaterials in ein aus dem Ausgangsmaterial gebildetes Pulverbett,
c. wenn in Schritt b. ein Grünteil geformt worden ist, chemisches Entbindern und/oder Entbindern mittels eines Lösemittels des Grünteils zum Erhalten eines Braunteils,
d. thermisches Entbindern des in Schritt b. oder c. erhaltenen Braunteils,
e. Verdichten des Braunteils zu dem Formkörper durch Sintern,
**dadurch gekennzeichnet,**
**dass** das Grünteil und/oder das Braunteil vor dem Schritt d. durch Beaufschlagen mit einem unter einem erhöhten Druck stehenden Medium einem isostatischen Pressvorgang unterzogen wird.

2. Verfahren nach Anspruch 1, **dadurch gekennzeichnet, dass** der isostatische Pressvorgang bei einer erhöhten Temperatur durchgeführt wird, insbesondere bei einer Temperatur im Bereich von 20 °C bis 200 °C.

3. Verfahren nach einem der vorhergehenden Ansprüche, **dadurch gekennzeichnet, dass** der isostatische Pressvorgang durch Beaufschlagen mit einem unter einem Druck von > 60 bar, vorzugsweise > 80 bar, insbesondere > 100 bar, stehenden Medium durchgeführt wird.

4. Verfahren nach einem der vorhergehenden Ansprüche, **dadurch gekennzeichnet, dass** als das unter einem erhöhten Druck stehende Medium ein Gas, insbesondere ein Inertgas, oder eine Flüssigkeit verwendet wird.

5. Verfahren nach einem der vorhergehenden Ansprüche, **dadurch gekennzeichnet, dass** das Grünteil und/oder das Braunteil mit einer die Außenflächen des Grünteils und/oder Braunteils umschließenden Beschichtung, insbesondere einer polymerischen Beschichtung, versehen wird.

6. Verfahren nach Anspruch 5, **dadurch gekennzeichnet, dass** die Beschichtung aus einem chemisch und/oder lösungsmittelbasiert und/oder thermisch abtrennbaren Material gebildet wird.

7. Verfahren nach Anspruch 6, **dadurch gekennzeichnet, dass** die Beschichtung aus einem thermisch, mechanisch, chemisch und/oder lösungsmittelbasiert abtrennbaren Material gebildet wird und dass nach dem isostatischen Pressvorgang und vor dem Schritt d. die Beschichtung thermisch, mechanisch, chemisch und/oder mit einem Lösungsmittel entfernt wird.

8. Verfahren nach einem der vorhergehenden Ansprüche, **dadurch gekennzeichnet, dass** das Grünteil und/oder das Braunteil vor dem isostatischen Pressvorgang mit einem Weichmacher behandelt wird.

9. Verfahren nach Anspruch 8, soweit dieser rückbezogen ist auf einen der Ansprüche 4 bis 6, **dadurch gekennzeichnet, dass** die Behandlung mit dem Weichmacher vor dem Versehen des Grünteils und/oder des Braunteils mit der Beschichtung erfolgt.

10. Verfahren nach einem der vorhergehenden Ansprüche, **dadurch gekennzeichnet, dass** das Formen des Grünteils oder des Braunteils in Schritt b. durch ein additives Formgebungsverfahren erfolgt.

11. Verfahren nach Anspruch 10, **dadurch gekennzeichnet, dass** das Formen des Grünteils oder des Braunteils in Schritt b. durch MIM, durch 3-D-Druck, durch Schlickerguss, durch Extrusion oder durch einen Formpressvorgang erfolgt.

12. Verfahren nach einem der vorhergehenden Ansprüche, **dadurch gekennzeichnet, dass** das Formteil pulvermetallurgisch hergestellt und in Schritt a. ein Metallpulver enthaltendes Ausgangsmaterial bereitgestellt wird.

13. Verfahren nach Anspruch 12, **dadurch gekennzeichnet, dass** als Metallpulver ein Pulver eines reaktiven Metalls, insbesondere Titanpulver, ein Titanlegierungspulver, Magnesiumpulver oder ein Magnesiumlegierungspulver, verwendet wird.

14. Verfahren nach einem der Ansprüche 12 oder 13, **dadurch gekennzeichnet, dass** das Metallpulver ein Hartmetallpulver enthält.

15. Verfahren nach einem der Ansprüche 1 bis 11, **dadurch gekennzeichnet, dass** ein keramisches Formteil hergestellt und in Schritt a. ein Keramikpulver enthaltendes Ausgangsmaterial bereitgestellt wird.
